(19) **Europäisches Patentamt / European Patent Office / Office européen des brevets**

(11) **EP 2 641 649 B1**

(12) **EUROPEAN PATENT SPECIFICATION**

(45) Date of publication and mention of the grant of the patent:
**06.09.2017  Bulletin 2017/36**

(51) Int Cl.:
*B01D 53/62* (2006.01)     *B01D 53/78* (2006.01)
*B01D 53/96* (2006.01)     *B01D 53/14* (2006.01)

(21) Application number: **13153922.3**

(22) Date of filing: **04.02.2013**

(54) **Carbon dioxide separating and collecting system and method of operating same**

Kohlenstoffdioxidtrennungs- und -sammelsystem und Verfahren zu dessen Betrieb

Système de collecte et de séparation de dioxyde de carbone et son procédé de fonctionnement

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.02.2012  JP 2012040288**

(43) Date of publication of application:
**25.09.2013  Bulletin 2013/39**

(60) Divisional application:
**17160927.4 / 3 199 223**

(73) Proprietor: **Kabushiki Kaisha Toshiba**
**Tokyo (JP)**

(72) Inventors:
• **Oohashi, Yukio**
**Tokyo (JP)**

• **Ogawa, Takashi**
**Tokyo (JP)**
• **Kitamura, Hideo**
**Tokyo (JP)**

(74) Representative: **Moreland, David et al**
**Marks & Clerk LLP**
**Aurora**
**120 Bothwell Street**
**Glasgow G2 7JS (GB)**

(56) References cited:
**EP-A1- 0 020 967       EP-A2- 0 920 901**
**WO-A1-2009/035340     WO-A1-2011/122525**
**WO-A1-2011/130796     US-A- 3 362 133**
**US-A- 4 548 620          US-A- 5 512 084**

**Description**

CROSS REFERENCE TO RELATED APPLICATION

This application is based upon and claims the benefit of priority from the prior Japanese Patent Application No. 2012-40288, filed on February 27, 2012, the entire contents of which are incorporated herein by reference.

FIELD

Embodiments described herein relate to a carbon dioxide separating and collecting system and a method of operating the same.

BACKGROUND

In recent years, importance of a problem of global warming has become increased due to the greenhouse effect of carbon dioxide ($CO_2$) which is combustion products of fossil fuels. With such a background, studies are energetically made regarding a method of separating and collecting carbon dioxide in a combustion exhaust gas by bringing the combustion exhaust gas into contact with an amine-containing absorbing liquid, and a method of storing the collected carbon dioxide without emitting the carbon dioxide to the atmosphere, with regard to a thermal power station and the like which use a large amount of fossil fuels.

An example of the method of separating and collecting the carbon dioxide by using the absorbing liquid is a method which includes a step of bringing the combustion exhaust gas into contact with the absorbing liquid in an absorbing tower to cause the absorbing liquid to absorb the carbon dioxide in the combustion exhaust gas, and a step of heating the absorbing liquid which has absorbed the carbon dioxide in a regenerating tower to release the carbon dioxide from the absorbing liquid. The absorbing liquid which released the carbon dioxide and is regenerated is circulated to the absorbing tower again and is reused.

When this method is conducted, the amount of energy required in the step of releasing the carbon dioxide is enormous. Therefore, in this method, the amount of the energy is reduced by preheating a low-temperature absorbing liquid (rich liquid) which is discharged from the absorbing tower by using a high-temperature absorbing liquid (lean liquid) which is discharged from the regenerating tower and then supplying the preheated absorbing liquid to the regenerating tower. This preheating treatment is conducted by a regenerative heat exchanger which supplies heat quantity of the high-temperature absorbing liquid to the low-temperature absorbing liquid.

US 3 362 1 and EP0920901 both relate to a method of hydrogen sulphide and carbon dioxide removal from Gas mixtures containing $H_2S$ and $CO_2$.

BRIEF DESCRIPTION OF THE DRAWINGS

FIG. 1 is a schematic view illustrating a structure of a carbon dioxide separating and collecting system of a first embodiment;
FIG. 2 is a graph showing measured values of pressure loss of a gas-liquid two-phase flow which vertically flows down;
FIG. 3 is a schematic view illustrating a structure of a carbon dioxide separating and collecting system of a first example
FIG. 4 is a schematic view illustrating a structure of a carbon dioxide separating and collecting system of a second embodiment; and
FIG. 5 is a schematic view illustrating a structure of a carbon dioxide separating and collecting system of a second example.

DETAILED DESCRIPTION

Embodiments will now be explained with reference to the accompanying drawings.

The high-temperature absorbing liquid and low-temperature absorbing liquid, however, usually circulate in a state of a liquid phase, so that the heat transfer characteristics between these absorbing liquids are low. Therefore, the regenerative heat exchanger is required to have a wide heat transfer area. As a result, the size of the regenerative heat exchanger becomes large.

Furthermore, when it is attempted to bring the temperature of the low-temperature absorbing liquid close to the operation temperature of the regenerating tower as much as possible by the regenerative heat exchanger, the temperature difference between the high-temperature absorbing liquid and the low-temperature absorbing liquid becomes very small in the vicinity of the outlet of the regenerative heat exchanger. Therefore, the heat transfer characteristics between these absorbing liquids become very low in the vicinity of the outlet of the regenerative heat exchanger. As a result, the size of the regenerative heat exchanger is required to be further large. On the other hand, if the low-temperature absorbing liquid is supplied to the regenerating tower in a state in which the above described temperature difference is large, the effect of reducing the energy consumption in the regenerating tower by the regenerative heat exchanger becomes small.

In one embodiment, a carbon dioxide separating and collecting system includes an absorbing tower configured to cause an absorbing liquid to absorb carbon dioxide, and discharge a rich liquid which is the absorbing liquid which has absorbed the carbon dioxide. The system further includes a regenerating tower configured to cause the absorbing liquid to release a gas containing the carbon dioxide, and discharge the released gas and a lean liquid which is the absorbing liquid having a dissolved carbon dioxide concentration lower than a dissolved carbon dioxide concentration of the rich liquid. The system further includes a regenerative heat exchanger configured to heat the rich liquid flowing between the absorbing tower and the regenerating tower by using heat of the lean liquid flowing between the regenerating tower and the absorbing tower. A discharge port of the rich liquid of the regenerative heat exchanger is disposed at a higher position than a supply port of the rich liquid of the regenerating tower so that the rich liquid discharged from the regenerative heat exchanger contains a descending flow by which a value of liquid head pressure loss in a path from the discharge port to the supply port becomes negative, and an absolute value of the liquid head pressure loss becomes larger than an absolute value of flow friction pressure loss in the path from the discharge port to the supply port.

(First Embodiment)

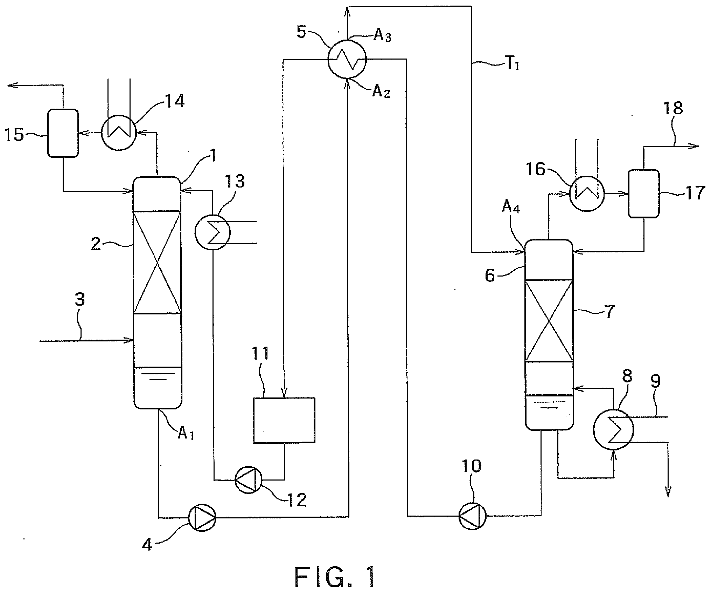

FIG. 1 is a schematic view illustrating a structure of a carbon dioxide separating and collecting system of a first embodiment.

The carbon dioxide separating and collecting system of FIG. 1 includes an absorbing tower 1, an absorbing-tower packed bed 2, a combustion exhaust gas supply port 3, a rich-liquid transferring pump 4, a regenerative heat exchanger 5, a regenerating tower 6, a regenerating-tower packed bed 7, a regenerating tower reboiler 8, a reboiler-heating medium supply port 9, a lean-liquid transferring pump 10, a lean liquid tank 11, a lean-liquid returning pump 12, a lean liquid cooler 13, an absorbing-tower reflux condenser 14, a gas-liquid separator 15 for the absorbing tower, a regenerating-tower reflux condenser 16, a gas-liquid separator 17 for the regenerating tower, and a collected $CO_2$ discharge line 18.

The combustion exhaust gas sent from a thermal power station and the like is introduced into the lower part of the absorbing tower 1 through the combustion exhaust gas supply port 3. The absorbing tower 1 brings the combustion exhaust gas in contact with an absorbing liquid, and causes the absorbing liquid to absorb carbon dioxide in the combustion exhaust gas. The absorbing liquid is introduced from the upper part of the absorbing tower 1, passes through the absorbing-tower packed bed 2 which has been filled with a filler for enhancing the efficiency of gas-liquid contact, and flows down the inside of the absorbing tower 1. In the present embodiment, a mixture of an amine compound and water, for instance, is used as the absorbing liquid.

Most of the carbon dioxide in the combustion exhaust gas is absorbed by the absorbing liquid, and an exhaust gas in which the carbon dioxide content has been decreased is discharged from the top of the absorbing tower 1. This exhaust gas is cooled by the absorbing-tower reflux condenser 14, its moisture is condensed, then the moisture is separated from the exhaust gas by the gas-liquid separator 15, and the resultant exhaust gas is discharged to the outside of the system. On the other hand, the separated moisture contains a component of the absorbing liquid, and accordingly is returned to the absorbing tower 1.

The rich liquid which is the absorbing liquid that has absorbed the carbon dioxide is accumulated in the bottom part of the absorbing tower 1. The rich liquid which has been accumulated in the bottom part of the absorbing tower 1 is discharged from the bottom part of the absorbing tower 1, and is supplied into the regenerating tower 6 through the regenerative heat exchanger 5 by the rich-liquid transferring pump 4. This rich liquid is introduced from the upper part of the regenerating tower 6, passes through the regenerating-tower packed bed 7 which has been filled with a filler for enhancing the efficiency of gas-liquid contact, and flows down the inside of the regenerating tower 6.

As a result, the absorbing liquid is accumulated in the bottom part of the regenerating tower 6. A part of the absorbing liquid which has been accumulated in the bottom part of the regenerating tower 6 is discharged from the bottom part of the regenerating tower 6, and is circulated between the regenerating tower 6 and the regenerating tower reboiler 8. On this occasion, this absorbing liquid is heated by a reboiler heating medium which has been supplied from the reboiler-heating medium supply port 9, and generates its vapor. The generated vapor is returned to the inside of the regenerating tower 6, passes and rises through the regenerating-tower packed bed 7, and heats the flowing-down absorbing liquid. As a result, the carbon dioxide gas and water vapor are released from the absorbing liquid in the regenerating tower 6.

The exhaust gas containing the released carbon dioxide gas and water vapor is discharged from the top of the regenerating tower 6. This exhaust gas is cooled by the regenerating-tower reflux condenser 16, its moisture is condensed, and the moisture is separated from the exhaust gas by the gas-liquid separator 17, and the exhaust gas becomes a gas containing only the carbon dioxide and is discharged to the outside of the system from the collected $CO_2$ discharge line 18. On the other hand, the separated moisture contains the component of the absorbing liquid, and accordingly is returned to the regenerating tower 6.

On the other hand, the lean liquid which is an absorbing liquid having a dissolved $CO_2$ concentration lower than that of the rich liquid is accumulated in the bottom part of the regenerating tower 6. The lean liquid which has been accumulated in the bottom part of the regenerating tower 6 is discharged from the bottom part of the regenerating tower 6, and is pooled in the lean liquid tank 11 through the regenerative heat exchanger 5 by the lean-liquid transferring pump 10. The pooled lean liquid is supplied into the absorbing tower 1 through the lean liquid cooler 13 by the lean-liquid returning pump 12. This lean liquid is introduced from the upper part of the absorbing tower 1, and is reused for collecting the carbon dioxide.

(1) Details of Regenerative Heat Exchanger 5

Details of the regenerative heat exchanger 5 will be described below with reference to FIG. 1 subsequently.

The regenerative heat exchanger 5 is arranged in a point at which a rich liquid line that extends from the absorbing tower 1 toward the regenerating tower 6 intersects with a lean liquid line that extends from the regenerating tower 6 toward the absorbing tower 1. This lean liquid has a remaining heat which the lean liquid has acquired when having been heated by the regenerating tower reboiler 8, and the regenerative heat exchanger 5 heats a rich liquid flowing through the rich liquid line by using the heat of this lean liquid.

Reference character $A_1$ illustrated in FIG. 1 denotes a discharge port of the rich liquid of the absorbing tower 1. In addition, reference characters $A_2$ and $A_3$ denote a supply port and a discharge port of the rich liquid of the regenerative heat exchanger 5, respectively. In addition, reference character $A_4$ denotes a supply port of the rich liquid of the regenerating tower 6. Furthermore, reference character $T_1$ denotes a pipe which extends from the discharge port $A_3$ of the rich liquid of the regenerative heat exchanger 5 toward the supply port $A_4$ of the rich liquid of the regenerating tower 6.

In the present embodiment, the discharge port $A_3$ of the rich liquid of the regenerative heat exchanger 5 is disposed at a higher position than the supply port $A_4$ of the rich liquid of the regenerating tower 6. As a result, at least a part of the pipe $T_1$ forms a down comer (descending pipe), so that the rich liquid flowing in the pipe $T_1$ contains a descending flow.

The reason why the discharge port $A_3$ is disposed at a higher position than the supply port $A_4$ will be described below.

Suppose that a pressure at the discharge port $A_3$ of the regenerative heat exchanger 5 is represented by "$P_{EXO}$", and an operation pressure of the regenerating tower 6 is represented by "$P_{RG}$". Then, the relationship of Expression (1) holds between these pressures.

$$P_{EXO} = \Delta P_F + \Delta P_H + P_{RG} \ldots (1)$$

Here, "$\Delta P_F$" and "$\Delta P_H$" respectively represent flow friction pressure loss and liquid head pressure loss which are generated in a path from the discharge port $A_3$ of the regenerative heat exchanger 5 and to the supply port $A_4$ of the regenerating tower 6.

The value of "$\Delta P_F$" can be calculated from a computation expression of a flow friction loss in a pipe, which is described in a handbook concerning mechanical engineering and the like. On the other hand, "$\Delta P_H$" is expressed by the following Expression (2).

$$\Delta P_H = -\rho_m g H \ldots (2)$$

Here, "$\rho_m$" represents an average density of a fluid flowing through the pipe $T_1$. In addition, "$H$" represents a height difference obtained by subtracting the height of the supply port $A_4$ from the height of the discharge port $A_3$. In addition, "$g$" represents gravitational acceleration.

Therefore, if the discharge port $A_3$ has been provided at a lower position than the supply port $A_4$, the value of "$\Delta P_H$" becomes positive, but as in the present embodiment, when the discharge port $A_3$ is provided at a higher position than the supply port $A_4$, the value of "$\Delta P_H$" becomes negative. Therefore, in the present embodiment, when an absolute value of "$\Delta P_H$" is larger than an absolute value of "$\Delta P_F$", the value of "$P_{EXO}$" results in being smaller than the value of "$P_{RG}$". In other words, the pressure "$P_{EXO}$" at the discharge port $A_3$ of the regenerative heat exchanger 5 becomes lower than the operation pressure "$P_{RG}$" of the regenerating tower 6.

Therefore, according to the present embodiment, it becomes possible to lower the pressure in the regenerative heat exchanger 5 by structuring the system so that the absolute value of "$\Delta P_H$" becomes larger than the absolute value of "$\Delta P_F$".

As a result of having made an extensive investigation, the present inventors have found out that when the pressure in the regenerative heat exchanger 5 is lowered, the following phenomena occur.

Firstly, it has been found that when the pressure in the regenerative heat exchanger 5 is set at a certain value or lower, the carbon dioxide gas is dissociated from the rich liquid and moisture evaporates while the rich liquid is heated in the regenerative heat exchanger 5. In this case, the rich liquid in the regenerative heat exchanger 5 and the rich liquid which is discharged from the discharge port $A_3$ form a gas-liquid two-phase flow which contains gases of the liquids.

Secondly, it has been found that when the rich liquid becomes the gas-liquid two-phase flow in the regenerative heat exchanger 5, the heat transfer characteristics in the regenerative heat exchanger 5 become high. The reason is because the heat of the lean liquid can be recovered not only as a sensible heat of the rich liquid but also as a latent heat such as a dissociation heat of the carbon dioxide gas and the heat of vaporization of water. As a result, even when a temperature difference between the rich liquid and the lean liquid is not decreased so much, the recovered heat quantity in the regenerative heat exchanger 5 can be increased.

Therefore, in the present embodiment, the discharge port $A_3$ of the rich liquid of the regenerative heat exchanger 5 is disposed at a higher position than the supply port $A_4$ of the rich liquid of the regenerating tower 6. Specifically, a height difference between the discharge port $A_3$ and the supply port $A_4$ is set at a value so that the rich liquid which is discharged from the regenerative heat exchanger 5 becomes a gas-liquid two-phase flow. As a result, in the present embodiment, the recovered heat quantity in the regenerative heat exchanger 5 can be increased by such a simple structure that the discharge port $A_3$ is set at a higher position than the supply port $A_4$.

A height difference at which the rich liquid that is discharged from the regenerative heat exchanger 5 becomes the gas-liquid two-phase flow varies depending on the shape of the pipe $T_1$. It is considered that as the pipe $T_1$ becomes longer, the flow friction pressure loss "$\Delta P_F$" becomes larger in many cases and accordingly a necessary height difference becomes larger.

In addition, when the pressure in the regenerative heat exchanger 5 is lowered, a temperature is lowered at which the dissociation of the carbon dioxide gas and the evaporation of the moisture start. Therefore, in the present embodiment, such a design is adopted that the pressure in the regenerative heat exchanger 5 becomes lower, and thereby it becomes possible to lower the above described starting temperature and more surely make the rich liquid shift to a gas-liquid two-phase state.

According to the present embodiment, the regenerative heat exchanger 5 can recover a sufficient heat quantity even though a temperature difference between the rich liquid and the lean liquid in its inside is large, and accordingly the regenerative heat exchanger 5 can get smaller. Alternatively, the system of the present embodiment can reduce a temperature difference between the rich liquid and the lean liquid without increasing the size of the regenerative heat exchanger 5, and accordingly can recover a sufficient heat quantity by a compact regenerative heat exchanger 5.

As a result, the system of the present embodiment can reduce the amount of energy which is input from the outside for releasing carbon dioxide from the absorbing liquid in the regenerating tower 6.

(2) Measurement Results of Pressure Loss

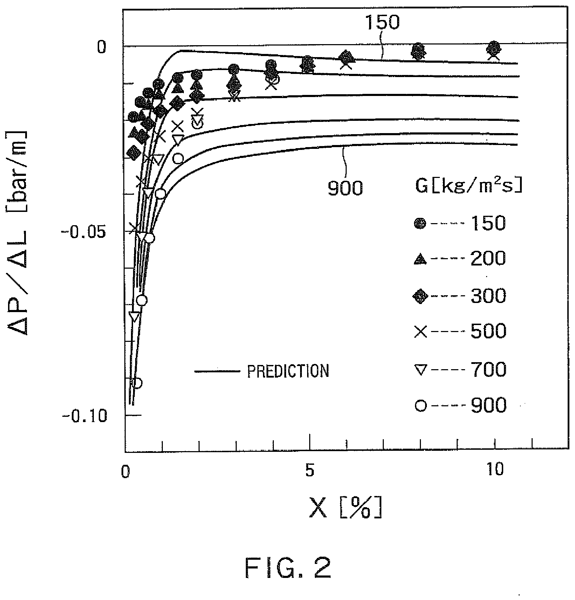

Measurement results of pressure loss will be described below with reference to FIG. 2.

FIG. 2 is a graph showing measured values of pressure loss of a gas-liquid two-phase flow which vertically flows down.

A horizontal axis X of FIG. 2 shows a weight flow rate percentage of a gas contained in the gas-liquid two-phase flow. In addition, a vertical axis $\Delta P/\Delta L$ of FIG. 2 shows a total value of flow friction pressure loss "$\Delta P_F$" and liquid head pressure loss "$\Delta P_H$" per unit length of a pipe.

It is understood from FIG. 2 that in such a region that a weight flow rate percentage X is 10% or less and a mass flow rate G of the gas-liquid two-phase flow per unit length of the pipe is 150 kg/m$^2$s or more, the value of the pressure loss $\Delta P/\Delta L$ is negative. Therefore, at the

discharge port $A_3$ of the regenerative heat exchanger 5 of the present embodiment, the weight flow rate percentage X of the gas in the gas-liquid two-phase flow shall be 10% or less.

When the fluid flowing through the pipe $T_1$ becomes only a liquid phase, a liquid density of the above described an average density "$\rho_m$" equals to a liquid density "$\rho_L$". On the other hand, when the fluid flowing through the pipe $T_1$ is the gas-liquid two-phase flow, the average density "$\rho_m$" of this fluid is represented by the following Expression (3).

$$\rho_m = \alpha_m \rho_G + (1 - \alpha_m) \rho_L \dots (3)$$

Here, "$\rho_G$" represents a density of a mixed gas containing carbon dioxide gas and a water vapor. In addition, "$\alpha_m$" is an average value of an area ratio of a gas phase which occupies in the cross section of the pipe $T_1$. The value of "$\alpha_m$" largely varies depending on the weight flow rate percentage X, the diameter of the pipe and the like.

(3) Effects of First Embodiment

Effects of the first embodiment will be described below.

As has been described above, in the present embodiment, the discharge port $A_3$ of the rich liquid of the regenerative heat exchanger 5 is disposed at a higher position than the supply port $A_4$ of the rich liquid of the regenerating tower 6 so that the rich liquid which is discharged from the regenerative heat exchanger 5 becomes the gas-liquid two-phase flow.

Therefore, according to the present embodiment, the recovered heat quantity in the regenerative heat exchanger 5 can be increased by such a simple structure that the discharge port $A_3$ is set at a higher position than the supply port $A_4$. As a result, the system of the present embodiment can reduce the amount of energy which is input from the outside for releasing carbon dioxide from the absorbing liquid in the regenerating tower 6.

(First example useful for understanding the present invention)

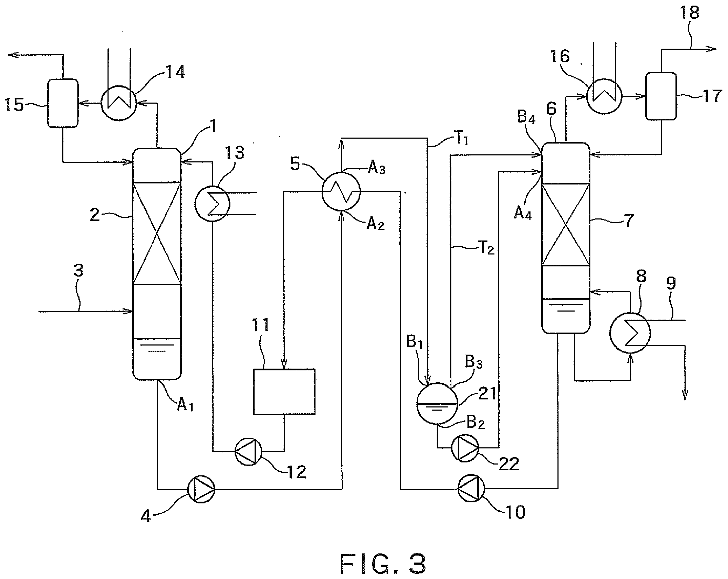

FIG. 3 is a schematic view illustrating a structure of a carbon dioxide separating and collecting system of an example useful for understanding the present invention.

The carbon dioxide separating and collecting system of FIG. 3 includes a first gas-liquid separator 21 and a first semi-lean liquid transferring pump 22, in addition to structural elements in FIG. 1.

The first gas-liquid separator 21 is disposed between the regenerative heat exchanger 5 and the regenerating tower 6, and separates the rich liquid which has been discharged from the regenerative heat exchanger 5 into a gas and a liquid. Reference characters $B_1$, $B_2$ and $B_3$ denote a supply port of the rich liquid, a discharge port of the liquid and a discharge port of the gas, respectively, in the first gas-liquid separator 21. The liquid and the gas which have been discharged from the discharge ports $B_2$ and $B_3$ are supplied into the regenerating tower 6 from the supply ports $A_4$ and $B_4$, respectively. This liquid (semi-lean liquid) is transferred to the regenerating tower 6 by the first semi-lean liquid transferring pump 22.

In this example, the discharge port $A_3$ of the rich liquid of the regenerative heat exchanger 5 is disposed at a higher position than the supply port $B_1$ of the rich liquid of the first gas-liquid separator 21. As a result, at least a part of the pipe $T_1$ which extends from the discharge port $A_3$ toward the supply port $B_1$ forms a down comer (descending pipe), so that the rich liquid flowing in the pipe $T_1$ contains a descending flow. On the other hand, the discharge port $B_2$ of the semi-lean liquid of the first gas-liquid separator 21 may be disposed at a lower position than the supply port $A_4$ of the semi-lean liquid of the regenerating tower 6.

Next, subsequently with reference to FIG. 3, the reason why the discharge port $A_3$ is disposed at a higher position than the supply port $B_1$ will be described below.

Suppose that a pressure in the gas discharge port $B_3$ of the first gas-liquid separator 21 is represented by "$P_{SP}$", and an operation pressure of the regenerating tower 6 is represented by "$P_{RG}$". Then, the relationship of Expression (4) holds between these pressures.

$$P_{SP} = \Delta P_{FG} + P_{RG} \dots (4)$$

Here, "$\Delta P_{FG}$" represents flow friction pressure loss in a pipe $T_2$ which extends from the discharge port $B_3$ toward the supply port $B_4$.

In this way, "$P_{SP}$" becomes higher than "$P_{RG}$" only by "$\Delta P_{FG}$". However, if the diameter of the pipe $T_2$ has been set to be large to some extent, "$\Delta P_{FG}$" is suppressed to a small value because the flow rate of the gas is small. Therefore, as in the following Expression (5), the pressure "$P_{SP}$" of the first gas-liquid separator 21 is considered to be approximately equal to the operation pressure "$P_{RG}$" of the regenerating tower 6.

$$P_{SP} \approx P_{RG} \dots (5)$$

Therefore, a relationship between the pressure "$P_{EXO}$" of the regenerative heat exchanger 5 and the pressure "$P_{SP}$" of the first gas-liquid separator 21 in the example of figure 3, becomes similar to the relationship between the pressure "$P_{EXO}$" of the regenerative heat exchanger 5 and the pressure "$P_{RG}$" of the regenerating tower 6 in the first embodiment.

Therefore, in this example" the discharge port $A_3$ of the rich liquid of the regenerative heat exchanger 5 is disposed at a higher position than the supply port $B_1$ of the rich liquid of the first gas-liquid separator 21. Specifically, a height difference between the discharge port $A_3$ and the supply port $B_1$ is set at such a value that the rich liquid which is discharged from the regenerative heat exchanger 5 becomes a gas-liquid two-phase flow.

As a result, in the present example, the recovered heat quantity in the regenerative heat exchanger 5 can be increased with such a simple structure that the discharge port $A_3$ is set at a higher position than the supply port $B_1$. Thereby, in the example of figure 3, the system can reduce the amount of energy which is input from the outside for releasing carbon dioxide from the absorbing liquid in the regenerating tower 6.

The method of separately introducing the gas and the liquid into the regenerating tower 6 as in this example has such an advantage as to be capable of reducing the collision of the droplet entrained in the gas with the inner wall of the regenerating tower 6 and suppressing the corrosion of the inner wall of the regenerating tower 6, as compared to the method of introducing the gas-liquid two-phase flow into the regenerating tower 6 as in the first embodiment.

(Second Embodiment)

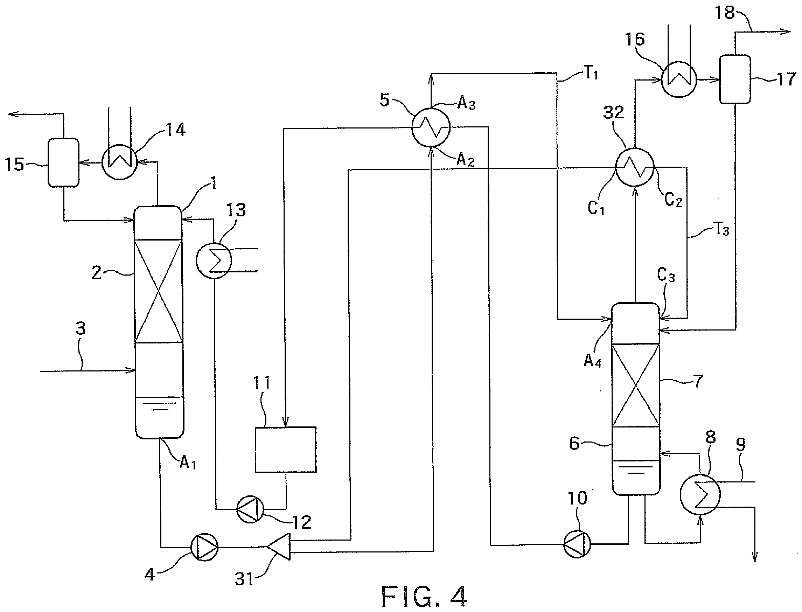

FIG. 4 is a schematic view illustrating a structure of a carbon dioxide separating and collecting system of a second embodiment.

The carbon dioxide separating and collecting system of FIG. 4 includes a flow splitting apparatus 31, and a $CO_2$ emitter 32, in addition to structural elements in FIG. 1.

The flow splitting apparatus 31 is disposed between the absorbing tower 1 and the regenerative heat exchanger 5, and splits the rich liquid flowing between the tower and the heat exchanger into first and second rich liquids. Then, the first rich liquid is supplied to the regenerative heat exchanger 5, and the second rich liquid is supplied to the $CO_2$ emitter 32. A distribution ratio of the first and second rich liquids is 85 to 90% to 10 to 15%, for instance.

The $CO_2$ emitter 32 is disposed between the flow splitting apparatus 31 and the regenerating tower 6, heats the second rich liquid by the heat of the exhaust gas which has been discharged from the regenerating tower 6, and causes the second rich liquid to release the carbon dioxide. The $CO_2$ emitter 32 discharges a third rich liquid which is an absorbing liquid having a dissolved $CO_2$ concentration lower than that of the second rich liquid, and supplies the third rich liquid into the regenerating tower 6. The carbon dioxide which has been emitted in the $CO_2$ emitter 32 is sent to the regenerating tower 6 together with the third rich liquid, and is discharged from the regenerating tower 6 together with the above described exhaust gas.

Reference characters $C_1$ and $C_2$ illustrated in FIG. 4 denote a supply port of the second rich liquid and a discharge port of the third rich liquid, respectively, in the $CO_2$ emitter 32. In addition, reference character $C_3$ denotes a supply port of the third rich liquid of the regenerating tower 6. Furthermore, reference character $T_3$ denotes a pipe which extends from the discharge port $C_2$ of the third rich liquid of the $CO_2$ emitter 32 to the supply port $C_3$ of the third rich liquid of the regenerating tower 6.

In the present embodiment, the discharge port $C_2$ of the $CO_2$ emitter 32 is disposed at a higher position than the supply port $C_3$ of the regenerating tower 6. Specifically, a height difference between the discharge port $C_2$ and the supply port $C_3$ is set at such a value that the third rich liquid which is discharged from the $CO_2$ emitter 32 becomes a gas-liquid two-phase flow.

As a result, in the present embodiment, the recovered heat quantity in the $CO_2$ emitter 32 can be increased with such a simple structure that the discharge port $C_2$ is set at a higher position than the supply port $C_3$. Thereby, in the present embodiment, the system can reduce the amount of energy which is input from the outside for releasing carbon dioxide from the absorbing liquid in the regenerating tower 6.

As has been described above, in the present embodiment, the system recovers a remaining heat of the lean liquid by the regenerative heat exchanger 5, and simultaneously recovers a remaining heat of the exhaust gas by the $CO_2$ emitter 32. Furthermore, in the present embodiment, the discharge port $A_3$ of the regenerative heat exchanger 5 and the discharge port $C_2$ of the $CO_2$ emitter 32 are disposed at higher positions than the supply ports $A_4$ and $C_3$ of the regenerating tower 6, respectively so that both of the first rich liquid which is discharged from the regenerative heat exchanger 5 and the third rich liquid which is discharged from the $CO_2$ emitter 32 form a gas-liquid two-phase flow.

An effect of disposing the discharge port $A_3$ of the regenerative heat exchanger 5 at a higher position than the supply port $A_4$ of the regenerating tower 6 will be described below, which is shown when the $CO_2$ emitter 32 is disposed.

In the case in which the rich liquid is split as in the present embodiment, if a conventional regenerative heat exchanger 5 has been used which recovers the heat of the lean liquid only by a sensible heat of the rich liquid, the heat quantity which is recovered in the regenerative heat exchanger 5 results in decreasing by an amount of decrease in the flow rate of the rich liquid which is supplied to the regenerative heat exchanger 5.

However, the regenerative heat exchanger 5 of the present embodiment recovers the heat of the lean liquid by the sensible heat and the latent heat of the rich liquid, and accordingly does not decrease the heat quantity to be recovered even when the flow rate of the rich liquid decreases, by controlling the pressure in the regenerative heat exchanger 5. Therefore, according to the embodiment, the recovered heat quantity of the whole system can be increased by the amount of the heat quantity which has been recovered by the $CO_2$ emitter 32.

Therefore, in the present embodiment, when the regenerative heat exchanger 5 and the $CO_2$ emitter 32 are disposed, the discharge port $A_3$ of the regenerative heat exchanger 5 is disposed at a higher position than the supply port $A_4$ of the regenerating tower 6 so that the first rich liquid which is discharged from the regenerative heat exchanger 5 becomes a gas-liquid two-phase flow. Therefore, according to the present embodiment, the recovered heat quantity of the whole system can be more increased than that of the case in which only the regenerative heat exchanger 5 is disposed.

Furthermore, in the present embodiment, when the regenerative heat exchanger 5 and the $CO_2$ emitter 32 are disposed, the discharge port $C_2$ of the $CO_2$ emitter 32 is disposed at a higher position than the supply port $C_3$ of the regenerating tower 6 so that the third rich liquid which is discharged from the $CO_2$ emitter 32 becomes the gas-liquid two-phase flow. Therefore, according to the present embodiment, the recovered heat quantity in the $CO_2$ emitter 32 can be increased, and the heat quantity to be recovered in the whole system can be further increased.

As a result, according to the present embodiment, the amount of energy can be reduced which is input from the outside for releasing the carbon dioxide from the absorbing liquid in the regenerating tower 6.

The result of FIG. 2 holds also for the pipe $T_3$. Therefore, at the discharge port $C_2$ of the $CO_2$ emitter 32 of the present embodiment, the weight flow rate percentage X of the gas in the gas-liquid two-phase flow results in being 10% or less.

(Second Example, useful for understanding the invention)

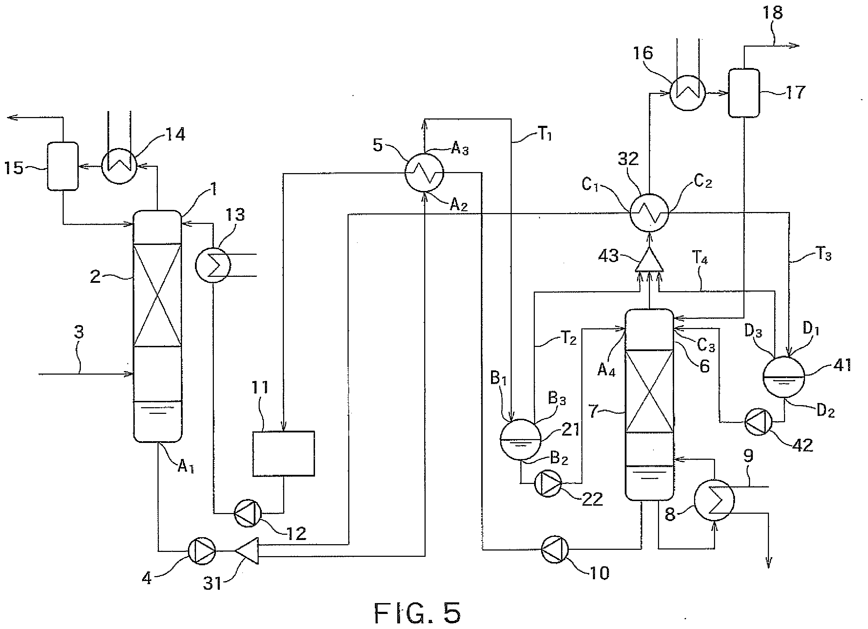

FIG. 5 is a schematic view illustrating a structure of a carbon dioxide separating and collecting system of a second example, useful for understanding the invention.

The carbon dioxide separating and collecting system of FIG. 5 includes a first gas-liquid separator 21, a first semi-lean liquid transferring pump 22, a flow splitting apparatus 31, a $CO_2$ emitter 32, a second gas-liquid separator 41, a second semi-lean liquid transferring pump 42 and a flow joining apparatus 43, in addition to structural elements illustrated in FIG. 1.

The second gas-liquid separator 41 is disposed between the $CO_2$ emitter 32 and the regenerating tower 6, and separates the third rich liquid which has been discharged from the $CO_2$ emitter 32 into a gas and a liquid. Reference characters $D_1$, $D_2$ and $D_3$ denote a supply port of the third rich liquid, a discharge port of the liquid, and a discharge port of the gas in the second gas-liquid separator 41, respectively. The liquid which has been discharged from the discharge port $D_2$ is supplied into the regenerating tower 6 from the supply port $C_3$. This liquid

(semi-lean liquid) is transferred to the regenerating tower 6 by the second semi-lean liquid transferring pump 42.

In the example of figure 5, the discharge port $C_2$ of the third rich liquid of the $CO_2$ emitter 32 is disposed at a higher position than the supply port $D_1$ of the third rich liquid of the second gas-liquid separator 41. As a result, at least a part of the pipe $T_3$ which extends from the discharge port $C_2$ toward the supply port $D_1$ forms a down comer (descending pipe), so that the third rich liquid flowing in the pipe $T_3$ contains a descending flow. On the other hand, the discharge port $D_2$ of the semi-lean liquid of the second gas-liquid separator 41 may be disposed at a lower position than the supply port $C_3$ of the semi-lean liquid of the regenerating tower 6.

In addition, the flow joining apparatus 43 causes the exhaust gas which has been discharged from the regenerating tower 6 to join a gas which has been discharged from the first gas-liquid separator 21 and a gas which has been discharged from the second gas-liquid separator 41 therein, and supplies the joined gas to the $CO_2$ emitter 32. Reference characters $T_2$ and $T_4$ denote pipes which extend from the discharge ports $B_3$ and $D_3$ toward the $CO_2$ emitter 32, respectively. In this way, in the present example, not only a remaining heat of the exhaust gas but also a remaining heat of the gas after the gas-liquid separation can be recovered.

In the present example, at least any one of these gases may be supplied into the regenerating tower 6, in a similar way to that in the example described with reference to figure 3. The method of separately introducing the gas and the liquid into the regenerating tower 6 has such an advantage as to be capable of reducing the collision of the droplet entrained in the gas with the inner wall of the regenerating tower 6 and suppressing the corrosion of the inner wall of the regenerating tower 6, as compared to the method of introducing the gas-liquid two-phase flow into the regenerating tower 6.

Next, subsequently with reference to FIG. 5, the reason why the discharge port $C_2$ of the $CO_2$ emitter 32 is disposed at a higher position than the second gas-liquid separator 41 will be described below.

The above described relationships of Expression (4) and Expression (5) hold also for the pipe $T_4$, similarly to the pipe $T_2$. Therefore, a relationship between the pressure of the $CO_2$ emitter 32 and the pressure of the second gas-liquid separator 41 in the present example becomes similar to the relationship between the pressure of the $CO_2$ emitter 32 and the pressure of the regenerating tower 6 in the second embodiment.

Therefore, in the present example, the discharge port $C_2$ of the third rich liquid of the $CO_2$ emitter 32 is disposed at a higher position than the supply port $D_1$ of the third rich liquid of the second gas-liquid separator 41. Specifically, a height difference between the discharge port $C_2$ and the supply port $D_1$ is set at such a value that the third rich liquid which is discharged from the $CO_2$ emitter 32 becomes a gas-liquid two-phase flow.

As a result, in the present example, the heat quantity to be recovered in the $CO_2$ emitter 32 can be increased with such a simple structure that the discharge port $C_2$ is set at a higher position than the supply port $D_1$. Thereby, in the present example, the system can reduce the amount of energy which is input from the outside for releasing carbon dioxide from the absorbing liquid in the regenerating tower 6.

The carbon dioxide separating and collecting system and the method of operating the same in at least one of the above described embodiments can increase the recovered heat quantity in the regenerative heat exchanger.

While certain embodiments have been described, these embodiments have been presented by way of example only, and are not intended to limit the scope of the inventions. Indeed, the novel systems and methods described herein may be embodied in a variety of other forms; furthermore, various omissions, substitutions and changes in the form of the systems and methods described herein may be made without departing from the scope of the inventions as defined by the appended claims.

**Claims**

1. A carbon dioxide separating and collecting system comprising:

   an absorbing tower (1) configured to cause an absorbing liquid to absorb carbon dioxide, and discharge a rich liquid which is the absorbing liquid which has absorbed the carbon dioxide; a regenerating tower (6) configured to cause the absorbing liquid to release a gas containing the carbon dioxide, and discharge the released gas and a lean liquid which is the absorbing liquid having a dissolved carbon dioxide concentration lower than a dissolved carbon dioxide concentration of the rich liquid; and a regenerative heat exchanger (5) configured to heat the rich liquid flowing between the absorbing tower (1) and the regenerating tower (6) by using heat of the lean liquid flowing between the regenerating tower (6) and the absorbing tower (1), wherein a discharge port ($A_3$) of the rich liquid of the regenerative heat exchanger (5) is disposed at a higher position than a supply port ($A_4$) of the rich liquid of the regenerating tower (6), so that the rich liquid discharged from the regenerative heat exchanger contains a descending flow by which a value of liquid head pressure loss in a path from the discharge port to the supply port becomes negative, and an absolute value of the liquid head pressure loss becomes larger than an absolute value of flow friction pressure loss in the path from the discharge port to the supply port, and to make the pressure in the regenerative heat exchanger (5) equal to or lower than the pressure at which the rich liquid discharged from the regenerative heat exchanger contains a descending gas-liquid two-phase flow.

2. The system of Claim 1, further comprising:

a flow splitting apparatus (31) configured to split the rich liquid flowing between the absorbing tower (1) and the regenerative heat exchanger (5) into first and second rich liquids, and supply the first rich liquid to the regenerative heat exchanger (5); and
a carbon dioxide emitter (32) configured to heat the second rich liquid by using heat of the gas discharged from the regenerating tower (6) to cause the second rich liquid to release the carbon dioxide, and discharge a third rich liquid which is the absorbing liquid having a dissolved carbon dioxide concentration lower than a dissolved carbon dioxide concentration of the second rich liquid;
wherein a discharge port ($C_2$) of the third rich liquid of the carbon dioxide emitter is disposed at a higher position than a supply port of the third rich liquid of the regenerating tower to make the pressure in the carbon dioxide emitter (32) equal to or lower than a certain pressure at which the third rich liquid discharged from the carbon dioxide emitter (32) contains a descending gas-liquid two-phase flow.

3. The system of Claim 1, wherein a weight flow rate percentage of a gas in the descending gas-liquid two-phase flow of the rich liquid is 10% or less at the discharge port of the regenerative heat exchanger.

4. The system of Claim 2, wherein a weight flow rate percentage of a gas in the descending gas-liquid two-phase flow of the third rich liquid is 10% or less at the discharge port ($C_2$) of the carbon dioxide emitter (32).

5. A method of operating a carbon dioxide separating and collecting system comprising an absorbing tower (1) configured to cause an absorbing liquid to absorb carbon dioxide, and discharge a rich liquid which is the absorbing liquid which has absorbed the carbon dioxide, and a regenerating tower (6) configured to cause the absorbing liquid to release a gas containing the carbon dioxide, and discharge the released gas and a lean liquid which is the absorbing liquid having a dissolved carbon dioxide concentration lower than a dissolved carbon dioxide concentration of the rich liquid, the method comprising:

heating the rich liquid flowing between the absorbing tower (1) and the regenerating tower (6) by a regenerative heat exchanger (5) using heat of the lean liquid flowing between the regenerating tower (6) and the absorbing tower (1);
supplying the rich liquid discharged from the regenerative heat exchanger (5) to the regenerating tower (6) or a first gas-liquid separator; and
discharging the rich liquid from the regenerative heat exchanger (5) in a state where a discharge port ($A_3$) of the rich liquid of the regenerative heat exchanger (5) is disposed at a higher position than a supply port ($A_4$) of the rich liquid of the regenerating tower (6) to make the pressure in the regenerative heat exchanger (5) equal to or lower than the pressure at which the rich liquid discharged from the regenerative heat exchanger (5) contains a descending gas-liquid two-phase flow.

## Patentansprüche

1. Trenn- und Sammelsystem für Kohlendioxid, das umfasst:

einen Absorbtionsturm (1), der konfiguriert wird, um eine Absorbtionsflüssigkeit zu veranlassen, Kohlendioxid zu absorbieren und eine angereicherte Flüssigkeit abzugeben, die die Absorbtionsflüssigkeit ist, die das Kohlendioxid absorbiert hat;
einen Regenerationsturm (6), der konfiguriert wird, um die Absorbtionsflüssigkeit zu veranlassen, ein Gas freizusetzen, das das Kohlendioxid enthält, und das freigesetzte Gas und eine gasarme Flüssigkeit abzugeben, die die Absorbtionsflüssigkeit mit einer gelösten Kohlendioxidkonzentration kleiner als eine gelöste Kohlendioxidkonzentration der angereicherten Flüssigkeit ist; und
einen regenerativen Wärmetauscher (5), der konfiguriert wird, um die angereicherte Flüssigkeit zwischen dem Absorbtionsturm (1) und dem Regenerationsturm (6) durch Verwenden von Wärme der gasarmen Flüssigkeit zu erwärmen, die zwischen dem Regenerationsturm (6) und dem Absorbtionsturm (1) fließt,
wobei ein Abflussanschluss ($A_3$) der angereicherten Flüssigkeit des regenerativen Wärmetauschers (5) bei einer höheren Stellung als ein Versorgungsanschluss ($A_4$) der angereicherten Flüssigkeit des Regenerationsturms (6) angeordnet wird, damit die von dem regenerativen Wärmetauscher abgegebene angereicherte Flüssigkeit eine absteigende Strömung enthält, durch die ein Wert des Druckverlusts der Flüssigkeitssäule in einem Pfad von dem Abflussanschluss zu dem Versorgungsanschluss negativ wird und ein Absolutwert des Druckverlusts der Flüssigkeitssäule größer als ein Absolutwert des Druckverlusts der Strömungsreibung in dem Pfad von dem Abflussanschluss zu dem Versorgungsanschluss wird, und um den Druck in dem regenerativen Wärmetauscher (5) gleich oder kleiner als den Druck zu machen, bei dem die von dem regenerativen Wärmetauscher abgegebene angereicherte Flüssigkeit eine absteigende Gas-Flüssigkeits-Zweiphasenströmung enthält.

2. System nach Anspruch 1, das des Weiteren umfasst:

eine Strömungsaufteilungsvorrichtung (31), die konfiguriert wird, um die angereicherte Flüssigkeitsströmung zwischen dem Absorbtionsturm (1) und dem regenerativen Wärmetauscher (5) in eine erste und zweite angereicherte Flüssigkeit aufzuspalten und die erste angereicherte Flüssigkeit an den regenerativen Wärmetauscher (5) zu liefern; und
einen Kohlendioxidemitter (32), der konfiguriert wird, um die zweite angereicherte Flüssigkeit durch Verwenden von Wärme des von dem Regenerationsturm (6) abgegebenen Gases zu erwärmen, um die zweite angereicherte Flüssigkeit zu veranlassen, das Kohlendioxid freizusetzen und eine dritte angereicherte Flüssigkeit abzugeben, die die Absorbtionsflüssigkeit mit einer gelösten Kohlendioxidkonzentration kleiner als eine gelöste Kohlendioxidkonzentration der zweiten angereicherten Flüssigkeit ist;
wobei ein Abflussanschluss ($C_2$) der dritten angereicherten Flüssigkeit des Kohlendioxidemitters bei einer höheren Stellung als ein Versorgungsanschluss der dritten angereicherten Flüssigkeit des Regenerationsturms angeordnet wird, um den Druck in dem Kohlendioxidemitter (32) gleich oder kleiner als einen bestimmten Druck zu machen, bei dem die dritte von dem Kohlendioxidemitter (32) abgegebene angereicherte Flüssigkeit eine absteigende Gas-Flüssigkeits-Zweiphasenströmung enthält.

3. System nach Anspruch 1, wobei ein Gewichts-Durchfluss-Prozentsatz eines Gases in der absteigenden Gas-Flüssigkeits-Zweiphasenströmung der angereicherten Flüssigkeit 10 % oder weniger an dem Abflussanschluss des regenerativen Wärmetauschers ist.

4. System nach Anspruch 2, wobei ein Gewichts-Durchfluss-Prozentsatz eines Gases in der absteigenden Gas-Flüssigkeits-Zweiphasenströmung der dritten angereicherten Flüssigkeit 10 % oder weniger an dem Abflussanschluss ($C_2$) des Kohlendioxide-

mitters (32) ist.

5. Verfahren zum Betreiben eines Trenn- und Sammelsystems für Kohlendioxid, das einen Absorbtionsturm (1), der konfiguriert wird, um eine Absorbtionsflüssigkeit zu veranlassen, Kohlendioxid zu absorbieren und eine angereicherte Flüssigkeit abzugeben, die die Absorbtionsflüssigkeit ist, die das Kohlendioxid absorbiert hat, und einen Regenerationsturm (6) umfasst, der konfiguriert wird, um die Absorbtionsflüssigkeit zu veranlassen, ein Gas freizusetzen, das das Kohlendioxid enthält und das freigesetzte Gas und eine gasarme Flüssigkeit abzugeben, die die Absorbtionsflüssigkeit mit einer gelösten Kohlendioxidkonzentration kleiner als eine gelöste Kohlendioxidkonzentration der angereicherten Flüssigkeit ist, wobei das Verfahren umfasst:

Erwärmen der angereicherten Flüssigkeitsströmung zwischen dem Absorbtionsturm (1) und dem Regenerationsturm (6) durch einen regenerativen Wärmetauscher (5) durch Verwenden von Wärme der gasarmen Flüssigkeitsströmung zwischen dem Regenerationsturm (6) und dem Absorbtionsturm (1);
Zuführen der von dem regenerativen Wärmetauscher (5) an den Regenerationsturm (6) oder einen ersten Gas-Flüssigkeitstrenner abgegebenen angereicherten Flüssigkeit; und
Entladen der angereicherten Flüssigkeit des regenerativen Wärmetauschers (5) in einem Zustand, bei dem ein Abflussanschluss ($A_3$) der angereicherten Flüssigkeit des regenerativen Wärmetauschers (5) bei einer höheren Stellung als ein Versorgungsanschluss ($A_4$) der angereicherten Flüssigkeit des Regenerationsturms (6) angeordnet wird, um den Druck in dem regenerativen Wärmetauscher (5) gleich oder kleiner als den Druck zu machen, bei dem die von dem regenerativen Wärmetauscher (5) abgegebene angereicherte Flüssigkeit eine absteigende Gas-Flüssigkeits-Zweiphasenströmung enthält.

Revendications

1. Système de séparation et de collecte de dioxyde de carbone comprenant :

une tour d'absorption (1) configurée pour amener un liquide absorbant à absorber du dioxyde de carbone, et évacuer un liquide riche qui est le liquide absorbant qui a absorbé le dioxyde de carbone :

une tour de régénération (6) configurée pour amener le liquide absorbant à libérer un gaz contenant le dioxyde de carbone, et évacuer le gaz libéré et un liquide pauvre qui est le liquide absorbant ayant une concentration en dioxyde de carbone dissous inférieure à une concentration en dioxyde de carbone dissous du liquide riche ; et un échangeur de chaleur régénérateur (5) configuré pour chauffer le liquide riche s'écoulant entre la tour d'absorption (1) et la tour de régénération (6) en utilisant la chaleur du liquide pauvre s'écoulant entre la tour de régénération (6) et la tour d'absorption (1),

dans lequel un orifice d'évacuation ($A_3$) du liquide riche de l'échangeur de chaleur régénérateur (5) est disposé au niveau d'une position plus haute qu'un orifice d'alimentation ($A_4$) du liquide riche de la tour de régénération (6), de sorte que le liquide riche évacué de l'échangeur de chaleur régénérateur contient un écoulement descendant par lequel une valeur de perte de pression de tête de liquide dans un chemin allant de l'orifice d'évacuation à l'orifice d'alimentation devient négative, et une valeur absolue de la perte de pression de tête de liquide devient supérieure à une valeur absolue de perte de pression de frottement d'écoulement dans le chemin allant de l'orifice d'évacuation à l'orifice d'alimentation, et pour rendre la pression dans l'échangeur de chaleur régénérateur (5) égale ou inférieure à la pression à laquelle le liquide riche évacué de l'échangeur de chaleur régénérateur contient un écoulement biphasé de gaz-liquide descendant.

**2.** Système selon la revendication 1, comprenant en outre :

un appareil de division d'écoulement (31) configuré pour diviser le liquide riche s'écoulant entre la tour d'absorption (1) et l'échangeur de chaleur régénérateur (5) un premier et un deuxième liquide riche, et pour alimenter l'échangeur de chaleur régénérateur (5) en premier liquide riche ; et un émetteur de dioxyde de carbone (32) configuré pour chauffer le deuxième liquide riche en utilisant la chaleur du gaz évacué de la tour de régénération (6) pour amener le deuxième liquide riche à libérer le dioxyde de carbone, et pour évacuer un troisième liquide riche qui est le liquide absorbant ayant une concentration en dioxyde de carbone dissous inférieure à une concentration en dioxyde de carbone dissous du deuxième liquide riche ; dans lequel un orifice d'évacuation ($C_2$) du troi-

sième liquide riche de l'émetteur de dioxyde de carbone est disposé au niveau d'une position plus haute qu'un orifice d'alimentation en troisième liquide riche de la tour de régénération pour rendre la pression dans l'émetteur de dioxyde de carbone (32) égale ou inférieure à une certaine pression à laquelle le troisième liquide riche évacué de l'émetteur de carbone (32) contient un écoulement biphasé de gaz-liquide descendant.

**3.** Système selon la revendication 1, dans lequel un pourcentage de débit en poids d'un gaz dans l'écoulement biphasé de gaz-liquide descendant du liquide riche est de 10 % ou moins au niveau de l'orifice d'évacuation de l'échangeur de chaleur régénérateur.

**4.** Système selon la revendication 2, dans lequel un pourcentage de débit en poids d'un gaz dans l'écoulement biphasé de gaz-liquide descendant du troisième liquide riche est de 10 % ou moins au niveau de l'orifice d'évacuation ($C_2$) de l'émetteur de dioxyde de carbone (32).

**5.** Procédé d'exploitation d'un système de séparation et de collecte de dioxyde de carbone comprenant une tour d'absorption (1) configurée pour amener un liquide absorbant à absorber du dioxyde de carbone, et pour évacuer un liquide riche qui est le liquide absorbant qui a absorbé le dioxyde de carbone, et une tour de régénération (6) configurée pour amener le liquide absorbant à libérer un gaz contenant le dioxyde de carbone, et pour évacuer le gaz libéré et un liquide pauvre qui est le liquide absorbant ayant une concentration en dioxyde de carbone dissous inférieure à une concentration en dioxyde de carbone dissous du liquide riche, le procédé comprenant les étapes consistant à :

chauffer le liquide riche s'écoulant entre la tour d'absorption (1) et la tour de régénération (6) par un échangeur de chaleur régénérateur (5) utilisant la chaleur du liquide pauvre s'écoulant entre la tour de régénération (6) et la tour d'absorption (1) ; alimenter la tour de régénération (6) ou un premier séparateur gaz-liquide en liquide riche évacué de l'échangeur de chaleur régénérateur (5) ; et évacuer le liquide riche de l'échangeur de chaleur régénérateur (5) dans un état où un orifice d'évacuation ($A_3$) du liquide riche de l'échangeur de chaleur régénérateur (5) est disposé au niveau d'une position plus haute qu'un orifice d'alimentation ($A_4$) du liquide riche de la tour de régénération (6) pour rendre la pression dans l'échangeur de chaleur régénérateur (5) égale ou inférieure à la pression à laquelle le liquide riche évacué de l'échangeur de chaleur régénérateur (5) contient un écoulement biphasé de gaz-liquide descendant.

FIG. 1

F I G. 2

FIG. 3

FIG. 4

FIG. 5

**EP 2 641 649 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012040288 A
- US 33621 A
- EP 0920901 A